# FASCICULE DE BREVET EUROPEEN

(11) **EP 2 655 836 B1**
(45) Date de publication et mention de la délivrance du brevet: **14.01.2015**
(21) Numéro de dépôt: 11815469.9
(22) Date de dépôt: 20.12.2011
(51) Int. Cl.: F02D 13/06, F02D 17/02, F02D 13/02, F02D 41/00

(54) **DISPOSITIF DE COMMANDE D'UN MOTEUR THERMIQUE**
VORRICHTUNG ZUR STEUERUNG EINER WÄRMEKRAFTMASCHINE
DEVICE FOR CONTROLLING A HEAT ENGINE

(30) Priorité: 22.12.2010 FR 1061096
(43) Date de publication de la demande: 30.10.2013
(73) Titulaire: Valeo Systèmes de Contrôle Moteur, 95800 Cergy Saint-Christophe (FR)
(72) Inventeur: GELEZ, Nicolas, F-78230 Le Pecq (FR); HOBRAICHE, Julien, F-60710 Chevrieres (FR)
(74) Mandataire: Cardon, Nicolas
(86) Numéro de dépôt international: PCT/FR2011/053092
(87) Numéro de publication internationale: WO 2012/085448

(56) Documents cités:
- EP-A2- 1 408 202
- US-A1- 2008 300 773

## Description

L'invention concerne un dispositif de commande d'un moteur thermique. Le moteur thermique est un moteur à combustion interne à quatre temps utilisable pour la propulsion de véhicules automobiles.

Un tel moteur thermique comprend un bloc dans lequel sont définies des chambres de combustion (ou cylindres) ayant une extrémité fermée par une culasse et une extrémité opposée fermée par un piston reçu à coulissement dans le bloc et relié par une bielle à un vilebrequin transformant le mouvement de translation alternatif du piston en un mouvement rotatif continu. La culasse est pourvue de moyens d'introduction dans chaque cylindre d'air ou d'un mélange air carburant et de moyens d'échappement des gaz brûlés. Ces moyens comprennent un conduit d'admission et un conduit d'échappement obturés respectivement par des soupapes d'admission et au moins une soupape d'échappement.

On rappelle que le couple global fourni en sortie d'un moteur thermique à N cylindres est la somme des couples individuels fournis par les pistons des N cylindres.

Comme la valeur de couple individuel dépend du remplissage du cylindre par le mélange air carburant, le rendement individuel d'un cylindre du moteur thermique augmente avec le couple individuel à fournir en sortie dudit cylindre.

On rappelle également que pour un moteur à allumage commandé, l'avance à l'allumage d'un cylindre est la différence de temps entre le moment où une étincelle est produite dans la chambre dudit cylindre et le moment où le piston se déplaçant dans ledit cylindre atteint son point mort haut.

### ARRIERE PLAN TECHNOLOGIQUE DE L'INVENTION

Dans une optique de réduction des émissions de polluants, et notamment de gaz à effet de serre, des moteurs thermiques de moins en moins consommateurs en carburant apparaissent. Sur un moteur thermique classique, le point de fonctionnement le plus polluant est atteint lorsque tous les cylindres du moteur fonctionnent à charge partielle. Sur les moteurs de fortes cylindrées, notamment sur les V8, il est ainsi connu de couper l'alimentation en carburant de la moitié des cylindres autour de ces points de fonctionnement de manière à augmenter la charge unitaire des cylindres restants et donc augmenter leur rendement ce qui rend le moteur moins polluant

Le couple global fourni en sortie du moteur thermique à forte cylindrée n'est alors que faiblement discontinu au passage de la désactivation de la moitié des cylindres. En effet, le nombre de cylindres du moteur thermique est suffisamment élevé pour que les cylindres restants n'aient à fournir qu'une charge unitaire supplémentaire relativement peu élevée. Ainsi, si le moteur thermique est utilisé pour la propulsion d'une voiture, le conducteur ne ressentira pas, voire peu cette discontinuité du couple global.

En revanche, pour un moteur à nombre de cylindres moindre, si la moitié des cylindres est désactivée, les cylindres restants devront fournir une charge unitaire supplémentaire élevée. Ceci conduira à un saut de couple important pour chaque cylindre restant : le couple global fourni en sortie du moteur thermique sera alors fortement discontinu. Le conducteur ressentira nécessairement le passage de tous les cylindres actifs à la moitié des cylindres actifs.

### OBJET DE L'INVENTION

Un but de l'invention est de remédier au moins en partie au problème précité.

### BREVE DESCRIPTION DE L'INVENTION

En vue de la réalisation de ce but, on propose un dispositif de commande d'un moteur thermique comportant plusieurs cylindres dont au moins un est pourvu d'au moins deux soupapes d'admission. Selon l'invention, le dispositif comporte une unité de commande agencée pour désactiver successivement lesdites soupapes d'admission.

Ainsi, le couple individuel de chacun des cylindres actifs augmente par degré à chaque désactivation d'une des soupapes d'admission du cylindre à désactiver. Le couple global fourni en sortie du moteur thermique n'est alors que faiblement discontinu lors de la désactivation dudit cylindre, même pour un moteur de petite cylindrée.

### BREVE DESCRIPTION DES DESSINS

L'invention sera mieux comprise à la lumière de la description qui suit d'un mode de réalisation particulier non limitatif de l'invention.

Il sera fait référence aux figures ci-jointes, parmi lesquelles :
- la figure 1 est une vue très schématique d'un moteur thermique comportant un dispositif de commande de l'art antérieur ;
- la figure 2 est un graphe illustrant différent paramètres du moteur thermique illustré à la figure 1 avant, pendant et après la désactivation de la moitié des cylindres du moteur ;
- la figure 3 est une vue très schématique d'un moteur thermique comportant un dispositif de commande selon l'invention ;
- la figure 4 est un graphe illustrant différents paramètres du moteur thermique illustré à la figure 2 avant, pendant et après la désactivation de la moitié des cylindres du moteur ;
- la figure 5 est un tableau listant de façon non exhaustif des configurations possibles d'un cylindre commandé par un dispositif de commande selon l'invention.

### DESCRIPTION DETAILLEE DE L'INVENTION

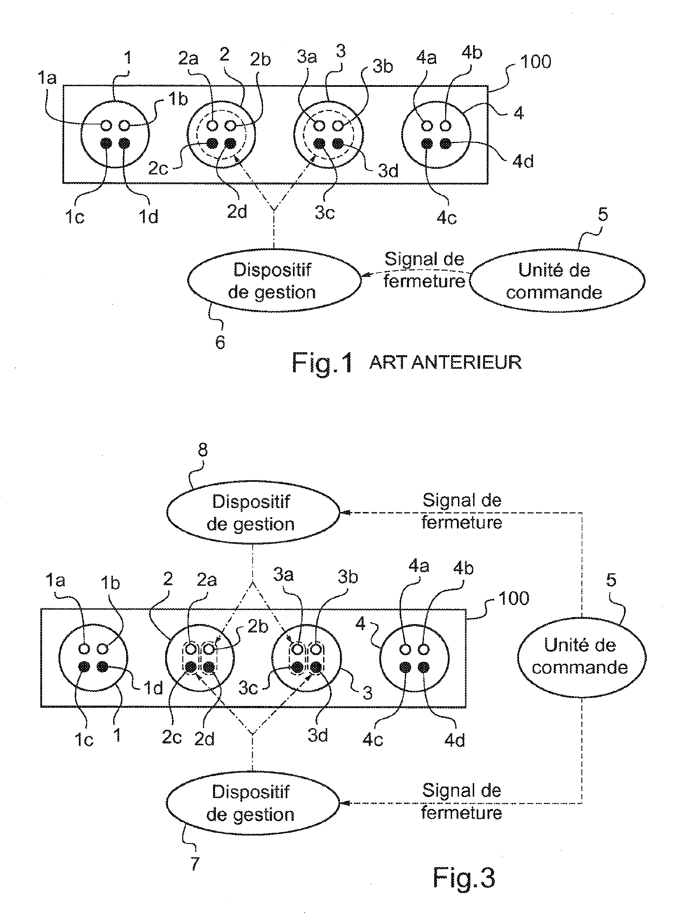

En référence à la figure 3, le dispositif de commande de l'invention est ici détaillé en référence à un moteur thermique d'une voiture. Le moteur thermique est ici un moteur à combustion interne comportant un bloc moteur 100 qui comporte en ligne un premier cylindre 1, un deuxième cylindre 2, un troisième cylindre 3 et un quatrième cylindre 4 (les cylindres étant numérotés de gauche à droite selon l'orientation de la figure 3) formant des chambres de combustion recevant chacun à coulissement un piston.

Les cylindres 1, 2, 3, 4 sont reliés à un système d'admission d'air et d'injection de carburant, et à un système d'échappement. Chaque cylindre est équipé d'un injecteur de carburant et est ici équipé d'une première soupape d'admission 1a, 2a, 3a, 4a et d'une deuxième soupape d'admission 1b, 2b, 3b, 4b ainsi que d'une première soupape d'échappement 1c, 2c, 3c, 4c et d'une deuxième soupape d'échappement 1d, 2d, 3d, 4d. Les soupapes d'admission (en blanc) 1a et 1b, 2a et 2b, 3a et 3b, 4a et 4b relient le cylindre associé 1, 2, 3, 4 au système d'admission et les soupapes d'échappement (en noir) 1c et 1d, 2c et 2d, 3c et 3d, 4c et 4d relient le cylindre associé 1, 2, 3, 4 au système d'échappement. Ici, les soupapes d'admission 1a et 1b, 2a et 2b, 3a et 3b, 4a et 4b et les soupapes d'échappement 1c et 1d, 2c et 2d, 3c et 3d, 4c et 4d sont associées à des actionneurs électromagnétique de soupapes, connus en eux-mêmes, permettant un actionnement individuel des soupapes de sorte qu'elles peuvent être ouvertes ou fermées indépendamment des autres soupapes.

Le dispositif de commande comporte également une unité de commande 5 ou ECU (pour « Engine Control Unit ») qui détermine des instructions de commande du moteur (comme la quantité de carburant injecté et le débit d'air d'admission) en fonction d'une demande d'accélération du conducteur (enfoncement de la pédale d'accélération) et des valeurs détectées de paramètres de fonctionnement du moteur.

Pour limiter une consommation en carburant du moteur il est connu de couper l'alimentation en carburant de la moitié des cylindres autour du point de fonctionnement du moteur le plus polluant. La charge unitaire des cylindres restants et donc leur rendement s'en trouvent ainsi augmentés. Dans l'exemple illustré, afin de limiter un refroidissement des cylindres du moteur durant une désactivation, on privilégie la désactivation du deuxième et du troisième cylindre 2 et 3. En effet, le premier et le quatrième cylindre 1 et 4 étant en périphérie du bloc moteur, ils assurent une meilleure diffusion thermique vers le centre du bloc moteur 100 que le deuxième et le troisième cylindre 2 et 3 vers les périphéries du bloc moteur 100.

Selon l'invention, l'unité de commande 5 est agencée de façon à désactiver successivement les soupapes d'admission 2a et 2b du deuxième cylindre 2 et désactiver successivement les soupapes d'admission 3a et 3b du troisième cylindre 3.

A cet effet, le dispositif de commande comporte un premier dispositif de gestion 7 des actionneurs de soupapes de la première soupape d'admission 2a et de la première soupape d'échappement 2c du deuxième cylindre 2 ainsi que des actionneurs de soupapes de la deuxième soupape d'admission 3b et de la deuxième soupape d'échappement 3d du troisième cylindre 3. Le dispositif de commande comporte également un deuxième dispositif de gestion 8 des actionneurs de soupapes de la deuxième soupape d'admission 2b et de la deuxième soupape d'échappement 2d du deuxième cylindre 2 ainsi que des actionneurs de soupapes de la première soupape d'admission 3a et de la première soupape d'échappement 3c du troisième cylindre 3.

L'unité de commande 5 est ainsi agencée de sorte à générer, dans un premier temps, un signal de fermeture de soupape à destination du premier dispositif de gestion 7 pour désactiver la première soupape d'admission 2a et la première soupape d'échappement 2c du deuxième cylindre 2 ainsi que la deuxième soupape d'admission 3b et la deuxième soupape d'échappement 3d du troisième cylindre 3. Dans un deuxième temps, l'unité de commande 5 génère un signal de fermeture de soupape à destination du deuxième dispositif de gestion 8 pour désactiver la deuxième soupape d'admission 2b et la deuxième soupape d'échappement 2d du deuxième cylindre 2 ainsi que la première soupape d'admission 3a et la première soupape d'échappement 3c du troisième cylindre 3.

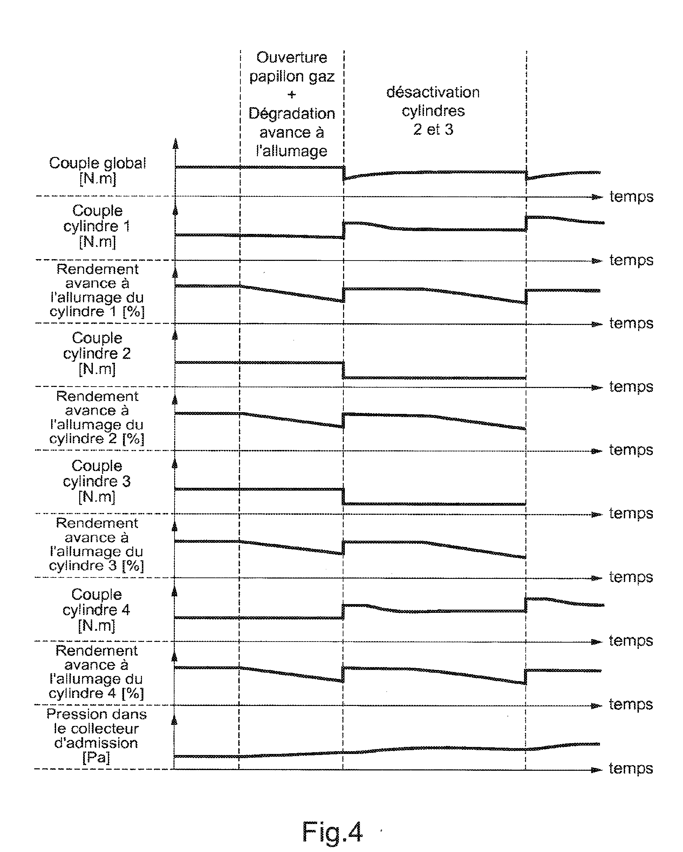

La désactivation du deuxième et du troisième cylindre 2 et 3 se fait ainsi de façon progressive. Les deux cylindres sont dans un premier temps complètement actifs puis à moitié actifs puis complètement désactivés. En référence à la figure 4, le couple individuel du deuxième et troisième cylindre 2, 3 diminue ainsi par degré à chaque désactivation d'un des ensembles soupape d'admission - soupape d'échappement et le couple individuel du premier cylindre et du quatrième cylindre 1, 4 augmente alors par degré. Le couple global fourni en sortie du moteur thermique n'est marqué que par deux faibles sauts de couple lors du passage de quatre cylindres actifs à deux cylindres actifs. Ainsi, un conducteur de la voiture ne ressentira que peu, voire pas, cette légère discontinuité du couple global.

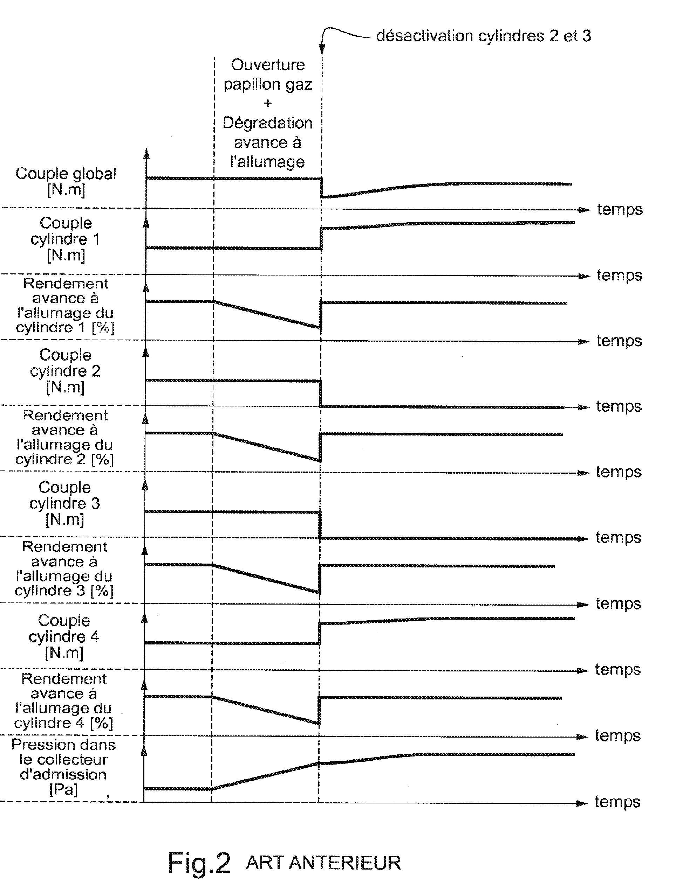

A contrario, en référence à la figure 1, dans un dispositif de commande de l'art antérieur (les références ont été reprises pour les éléments communs au dispositif de commande de l'art antérieur et de l'invention), l'unité de commande 5 génère un signal de fermeture de soupape à destination d'un unique dispositif de gestion 6 des actionneurs de soupapes du deuxième et du troisième cylindre 2 et 3 pour désactiver simultanément les soupapes d'admission 2a et 2b, 3a et 3b et les soupapes d'échappement 2c et 2d, 3c et 3d du deuxième et du troisième cylindre 2 et 3. En référence à la figure 2, la désactivation du deuxième et troisième cylindre 2, 3 est alors brutale et conduit à un saut de couple important qui est nécessairement ressenti par le conducteur.

En référence aux figures 3 et 4, selon un mode de réalisation privilégié, pour limiter encore davantage la discontinuité du couple global lors de la désactivation du deuxième et du troisième cylindre 2, 3 , le dispositif de commande est agencé de sorte à anticiper la désactivation des soupapes d'admission et d'échappement 2a, 2b, 2c, 2d et 3a, 3b, 3c, 3d du deuxième et du troisième cylindre 2 et 3 en commandant une ouverture d'un papillon des gaz du moteur thermique et simultanément une dégradation de l'avance à l'allumage des quatre cylindres du moteur thermique.

En effet, si le papillon des gaz n'était ouvert qu'une fois le deuxième et le troisième cylindre 2, 3 désactivés, le couple global diminuerait fortement avant de revenir à sa valeur initiale, la pression dans le collecteur d'admission du moteur ne pouvant augmenter de façon instantanée. En parallèle, pour compenser l'augmentation de la pression dans le collecteur d'admission due à l'ouverture du papillon des gaz, l'avance à l'allumage de tous les cylindres est dégradée de sorte à baisser le rendement individuel de tous les cylindres. Au moment de la désactivation du deuxième et du troisième cylindre 2, 3, l'avance à l'allumage optimale est alors rétablie pour le premier et le quatrième cylindre 1, 4.

En référence aux figures 1 et 2, on pourrait également avec le dispositif de l'art antérieur anticiper la désactivation simultanée des soupapes d'admission et d'échappement du deuxième et du troisième cylindre 2 et 3 en commandant une ouverture du papillon des gaz du moteur thermique et simultanément une dégradation de l'avance à l'allumage de tous les cylindres du moteur thermique. Toutefois, le deuxième et le troisième cylindre 2 et 3 étant désactivés simultanément, il faudrait ouvrir davantage le papillon des gaz et donc dégrader davantage l'avance à l'allumage de l'ensemble des cylindres qu'avec le dispositif de commande de l'invention. La dégradation de l'avance à l'allumage favoriserait alors davantage d'émissions de polluants et notamment du dioxyde de carbone.

L'invention n'est pas limitée à ce qui vient d'être décrit et englobe toute variante entrant dans le cadre défini par les revendications.

En particulier, bien qu'ici le dispositif de commande soit associé à un moteur thermique à quatre cylindres, le dispositif de commande pourra être associé à tout type de moteur thermique. On pourra ainsi appliquer l'invention à un moteur qui n'est pas à allumage commandé comme un moteur diesel ou encore à un moteur de plus forte cylindrée. On pourra également appliquer l'invention à un moteur dont les cylindres ont des configurations différentes entre eux à condition que le(s) cylindre(s) à désactiver comporte(nt) au moins deux soupapes d'admission. L'invention sera également utilisable avec tout système permettant un actionnement individuel des soupapes comme des actionneurs hydrauliques.

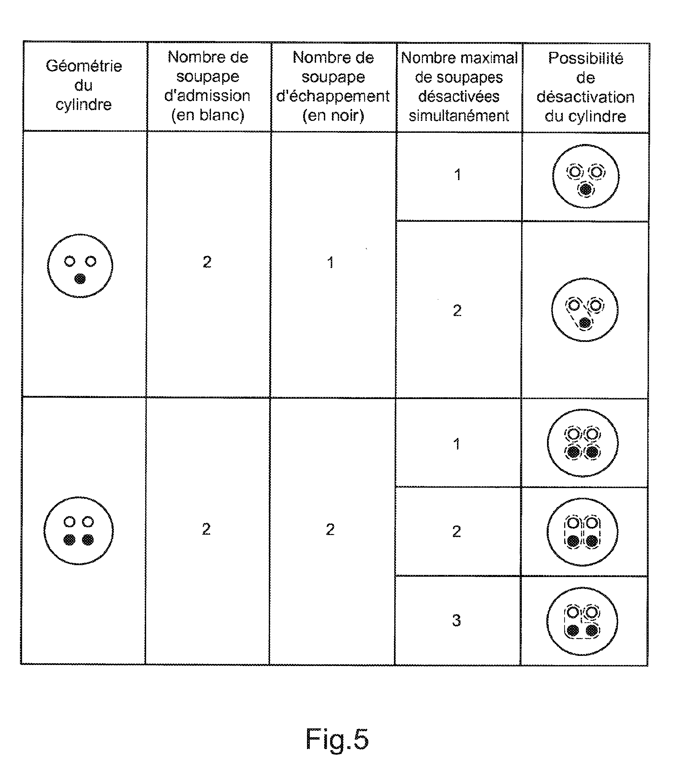

En outre, l'invention est applicable à toute configuration de cylindre à la condition que le(s) cylindre(s) à désactiver comporte(nt) au moins deux soupapes d'admission. En référence à la figure 5, différentes géométries de cylindres pour lesquelles l'invention est applicable sont illustrées. Des traits en pointillés indiquent des ensembles de soupapes, les soupapes à l'intérieur de ces pointillés devant être désactivées simultanément et les ensembles en pointillés devant être désactivés successivement par l'unité de commande 5. Ainsi bien qu'ici, l'unité de commande 5 soit agencée pour désactiver simultanément une soupape d'échappement avec une soupape d'admission d'un même cylindre, l'unité de commande 5 pourra désactiver la (ou les) soupape(s) d'échappement indépendamment des soupapes d'admission. Si le cylindre possède au moins deux soupapes d'échappement, lesdites soupapes d'échappement pourront également être désactivées simultanément avec une même soupape d'admission du cylindre. La figure 5 n'illustre qu'une partie des différentes possibilités de désactivation d'un cylindre selon l'invention. Ainsi, un cylindre à désactiver pourra comporter un plus grand nombre de soupapes d'admission ou d'échappement.

De plus, bien qu'ici l'unité de commande 5 soit agencée pour désactiver soupapes d'admission et soupapes d'échappement, l'unité de commande 5 pourra être agencée de façon à ne désactiver que les soupapes d'admission. Toutefois, dans un mode de réalisation privilégié, on désactivera soupapes d'admission et soupapes d'échappement pour maintenir une pression élevée dans le cylindre désactivé. En effet, si la pression dans les cylindres désactivés diminue progressivement, elle finit par être inférieure à la pression atmosphérique : de l'huile est ainsi aspirée depuis le carter jusque dans les cylindres désactivés. Cette huile sera ensuite brûlée et les produits polluants de la combustion évacués par le système d'échappement lorsque lesdits cylindres seront de nouveau sollicités.

## Revendications

1. Dispositif de commande d'un moteur thermique comportant plusieurs cylindres (1, 2, 3, 4) dont au moins un (2, 3) est pourvu d'au moins deux soupapes d'admission (2a, 2b, 3a, 3b), le dispositif étant **caractérisé en ce qu'**il comporte une unité de commande (5) agencée pour désactiver successivement lesdites soupapes d'admission.

2. Dispositif de commande selon la revendication 1, agencé pour anticiper la désactivation desdites soupapes d'admission (2a, 2b, 3a, 3b) en commandant une ouverture d'un papillon des gaz du moteur thermique et une dégradation de l'avance à l'allumage de tous les cylindres (1, 2, 3, 4) du moteur thermique.

3. Dispositif de commande selon la revendication 1, dans lequel ledit cylindre comporte au moins une soupape d'échappement (2c, 2d, 3c, 3d), l'unité de commande (5) étant agencée pour désactiver également la soupape d'échappement.

4. Dispositif de commande selon la revendication 3, dans lequel l'unité de commande (5) est agencée pour désactiver la soupape d'échappement (2c, 2d, 3c, 3d) simultanément avec l'une des deux soupapes d'admission (2a, 2b, 3a, 3b).

5. Dispositif de commande selon la revendication 1 ou 2, dans lequel le moteur thermique comporte quatre cylindres (1, 2, 3, 4), au moins deux cylindres (2, 3) comportant chacun un premier ensemble formé par une soupape d'admission et une soupape d'échappement (2a et 2c, 3b et 3d) et un deuxième ensemble formé par une soupape d'admission et une soupape d'échappement (2b et 2d, 3a et 3c), l'unité de commande (5) étant agencée pour désactiver simultanément le premier ensemble de soupapes du premier cylindre et du deuxième cylindre puis désactiver simultanément le deuxième ensemble de soupapes du premier cylindre et du deuxième cylindre.

## Patentansprüche

1. Steuervorrichtung eines Wärmemotors, der mehrere Zylinder (1, 2, 3, 4) aufweist, von denen mindestens einer (2, 3) mit mindestens zwei Einlassventilen (2a, 2b, 3a, 3b) versehen ist, wobei die Vorrichtung **dadurch gekennzeichnet ist, dass** sie eine Steuereinheit (5) aufweist, die eingerichtet ist, um die Einlassventile nacheinander zu deaktivieren.

2. Steuervorrichtung nach Anspruch 1, die eingerichtet ist, um die Deaktivierung der Einlassventile (2a, 2b, 3a, 3b) zu antizipieren, indem sie eine Öffnung einer Drosselklappe für die Gase des Wärmemotors und eine Leistungsminderung der Frühzündung aller Zylinder (1, 2, 3, 4) des Wärmemotors steuert.

3. Steuervorrichtung nach Anspruch 1, wobei der Zylinder mindestens ein Auslassventil (2c, 2d, 3c, 3d) aufweist, wobei die Steuereinheit (5) eingerichtet ist, um das Auslassventil ebenfalls zu deaktivieren.

4. Steuervorrichtung nach Anspruch 3, wobei die Steuereinheit (5) eingerichtet ist, um das Auslassventil (2c, 2d, 3c, 3d) gleichzeitig mit einem der zwei Einlassventile (2a, 2b, 3a, 3b) zu deaktivieren.

5. Steuervorrichtung nach Anspruch 1 oder 2, wobei der Wärmemotor vier Zylinder (1, 2, 3, 4) aufweist, wobei mindestens zwei Zylinder (2, 3) je eine erste Gruppe, die von einem Einlassventil und einem Auslassventil (2a und 2c, 3b und 3d) gebildet wird, und eine zweite Gruppe aufweisen, die von einem Einlassventil und einem Auslassventil (2b und 2d, 3a und 3c) geformt wird, wobei die Steuereinheit (5) eingerichtet ist, um gleichzeitig die erste Gruppe von Ventilen des ersten Zylinders und des zweiten Zylinders zu deaktivieren und dann gleichzeitig die zweite Gruppe von Ventilen des ersten Zylinders und des zweiten Zylinders zu deaktivieren.

## Claims

1. Device for controlling a heat engine comprising a plurality of cylinders (1, 2, 3, 4) at least one of which (2, 3) is provided with at least two intake valves (2a, 2b, 3a, 3b), the device being **characterized in that** it comprises a control unit (5) arranged to deactivate said intake valves in succession.

2. Control device according to Claim 1, arranged to anticipate the deactivation of said intake valves (2a, 2b, 3a, 3b) by commanding an opening of a butterfly valve for the gases from the heat engine and a degradation of the ignition advance of all the cylinders (1, 2, 3, 4) of the heat engine.

3. Control device according to Claim 1, in which said cylinder comprises at least one exhaust valve (2c, 2d, 3c, 3d), the control unit (5) being arranged to also deactivate the exhaust valve.

4. Control device according to Claim 3, in which the control unit (5) is arranged to deactivate the exhaust valve (2c, 2d, 3c, 3d) simultaneously with one of the two intake valves (2a, 2b, 3a, 3b).

5. Control device according to Claim 1 or 2, in which the heat engine comprises four cylinders (1, 2, 3, 4), at least two cylinders (2, 3) each comprising a first set formed by an intake valve and an exhaust valve (2a and 2c, 3b and 3d) and a second set formed by an intake valve and an exhaust valve (2b and 2d, 3a and 3c), the control unit (5) being arranged to simultaneously deactivate the first set of valves of the first cylinder and of the second cylinder then simultaneously deactivate the second set of valves of the first cylinder and of the second cylinder.
